# EUROPEAN PATENT SPECIFICATION

(11) **EP 1 386 257 B1**
(45) Date of publication and mention of the grant of the patent: **10.11.2004**
(21) Application number: 02712983.2
(22) Date of filing: 02.04.2002
(51) Int. Cl.: G06F 17/30, H04L 12/66, H04L 29/06

(54) **ARRANGEMENT FOR PROCESSING CLIENT REQUESTS**
ANORDNUNG ZUR VERARBEITUNG VON CLIENT-ANFORDERUNGEN
ENSEMBLE POUR LE TRAITEMENT DE REQUETES DE CLIENTS

(30) Priority: 03.04.2001 FI 20010690
(43) Date of publication of application: 04.02.2004
(73) Proprietor: TeliaSonera Finland Oyj, 00510 Helsinki (FI)
(72) Inventor: KOSKELA, Markku, FIN-02600 Espoo (FI)
(74) Representative: Pursiainen, Timo Pekka
(86) International application number: PCT/FI2002/000280
(87) International publication number: WO 2002/082315

(56) References cited:
- WO-A2-01/73522
- US-A- 5 805 803
- US-A- 6 088 796
- US-A- 6 141 759

## Description

### Field of the Invention

This invention relates generally to processing requests coming from a client to a network server. More particularly, the invention relates to HTTP requests. Furthermore, the invention relates to a security arrangement for services.

### Background of the Invention

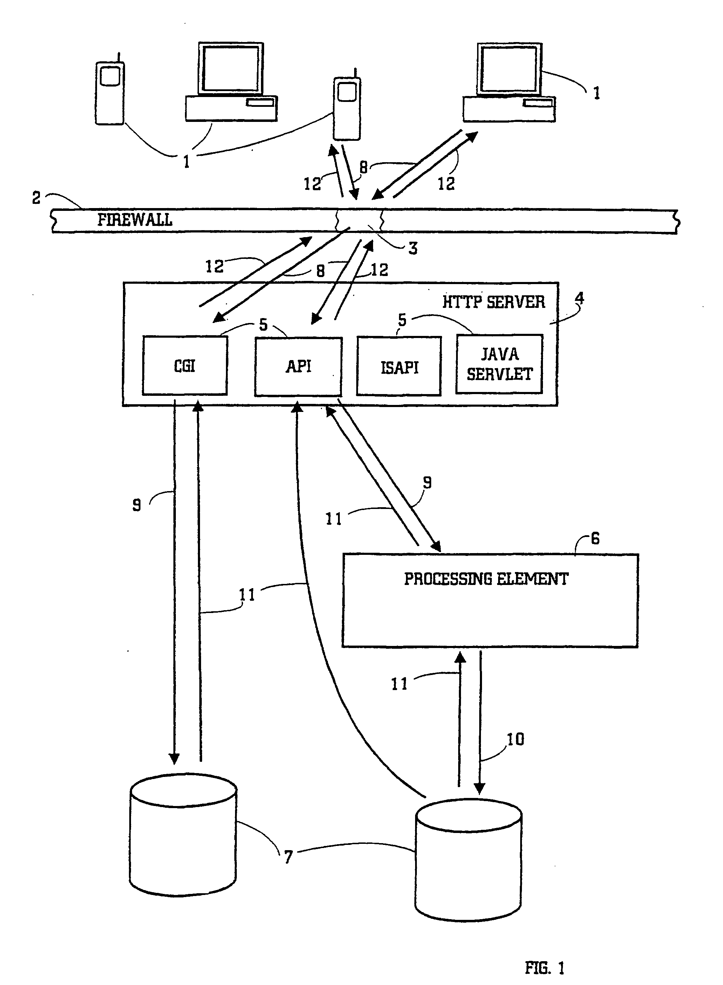

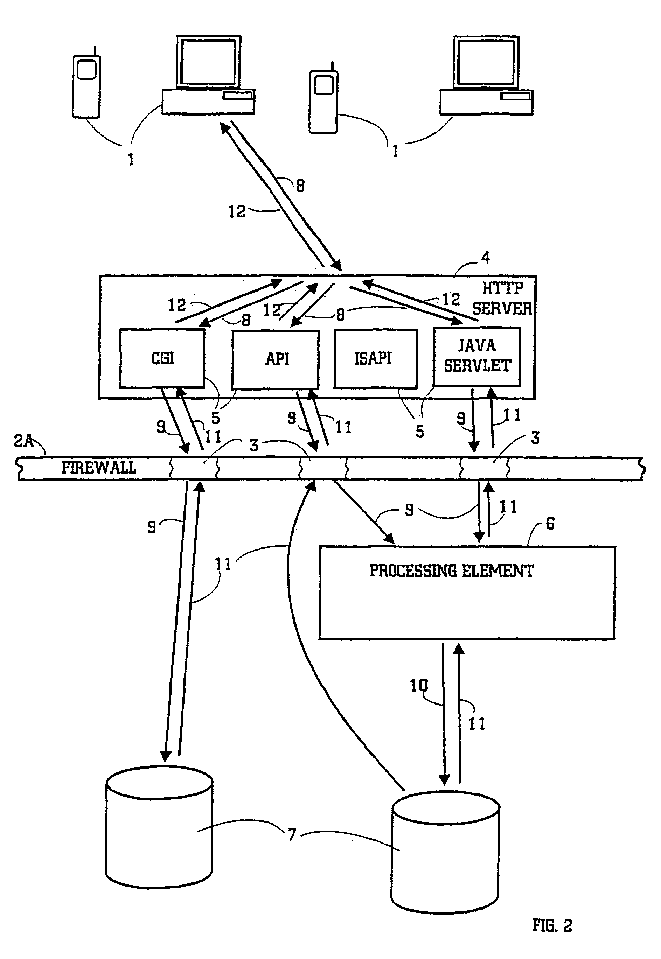

At present, server arrangements providing services usually contain a firewall, as in FIGS. **1** and **2.** The firewall is a security element whose purpose is to keep unwanted service requests out of the service providing systems. There are two types of firewalls: filtering firewalls that block selected network packets, and proxy servers that make network connections for you. Anyway, it is convenient to think about firewalls as packet filters. Data is only allowed to come to the system if the firewall rules allow it. As packets arrive they are filtered, for example, by their type, source address, destination address, and port information contained in each packet.

FIG. **1** shows an example of a possible arrangement at present. Clients' terminals **1** send service requests **8**, such as HTTP requests, through a firewall **2** to a HTTP server **4**. The requests are directed to the right applications **5,** such as CGI (Common Gateway Interface), API (Application Programming Interface), ISAPI (Internet Server Application Programming Interface), or Java Servlet, which handle the forward processing of each request. The application can use middleware services **6** for processing the request sent forward **9** in a back-end system, i.e. in the system behind the HTTP server. The middleware processing element **6** can use a database 7 for asking **10** necessary data needed for establishing the service requested. The database returns the request **11** as a response back to the processing element or directly to the application. Alternatively, the application can have a direct connection to a relevant database. The applications **5** send **12** responses to the clients' terminals through the firewall.

All connections between the clients' terminals and the HTTP server go through an allowed "hole" **3** in the firewall. The hole lets the packets which are not filtered away go through. However, in situations as in FIG. **1** the firewall has to allow HTTP traffic to go through due to the firewall being situated between the clients' terminals (in the Internet) and the HTTP server. Since the HTTP traffic amount is very huge the firewall cannot establish a very efficient security effect.

Another problem which appears in the system of FIG. **1** is that the connection to the applications and the back-end system are opened (established) outside the service providing arrangement. This exposes the arrangement to thousands of simultaneous HTTP requests, which can create an overload situation in the service arrangement, and even crash the arrangement. Naturally, service providers do not want this to happen.

FIG. **2** shows another example of a possible arrangement at present. Clients' terminals **1** send service requests **8**, such as HTTP requests to a HTTP server **4**. The requests are directed to the right applications **5**, which handle the processing of each request forward. The application can use middleware services **6** for processing the request sent forward **9** in a back-end system, i.e. in the system behind the HTTP server. The requests **9** sent to the back-end system go through a firewall **2A**. The middleware processing element **6** can use a database **7** for asking **10** necessary data needed for establishing the service requested. The database responds **11** back to the processing element or directly to the application through the firewall. Alternatively, the application can have a direct connection to a relevant database. The applications **5** send **12** responses to the clients' terminals.

All connections from the clients' terminals go straight to the HTTP server, which directs them to the relevant application. As can be noticed in FIG. **2** the firewall has to allow different traffic types to go through due to the different applications. So the firewall has to have several "holes" 3 for letting the packets, which are not filtered away, go through. As a result of having several "holes" in the firewall 2A, this solution is also exposed to security risks.

Also in FIG. **2** the connections to the applications and the back-end system are opened (established) outside the service providing arrangement, exposing the arrangement to thousands of simultaneous HTTP requests, which can create an overload situation in the service arrangement, and even crash the arrangement.

U.S. patent application 6,141,759 also shows a present solution wherein connections are opened (established) outside the firewall making it possible to crash the system of a service provider. The intention of the invention is to increase the security level of a service providing arrangement and eliminate the possibility of crashing the arrangement from the outside.

### Summary of the Invention

The idea of the invention is that a HTTP request coming from a client's terminal is picked up by a request handler from a HTTP server. The HTTP server contains an application for receiving the client requests and sending responses, a queue for the received client requests, and another queue for the responses. The HTTP server is situated outside the firewall, and the request handler inside the firewall, as are back-end systems for the request handler as well. Since the request handler requires the HTTP server to return a client request in the request queue as a response to the handler a connection through the firewall is opened, i.e. established, inside the firewall. In other words, the request handler in the firewall controls the traffic through the firewall. This arrangement eliminates situations where HTTP requests coming from the Internet overload the service providing systems.

The request handler sends the requests forward to the back-end systems, wherein the requests are handled for establishing responses for sending them back to the clients. The responses are sent through the firewall either to the response queue or to a special database from where the HTTP server can pick them up.

Since all connections through the firewall are opened inside the firewall the security of the service providing arrangement is more reliable than in the present solutions.

### Brief Description of the Drawings

In the following the invention is described in more detail by means of FIGS. **1** - **5** in the attached drawings where
- FIG. **1**: illustrates an example of a present solution for processing HTTP requests,
- FIG. **2**: illustrates another example of a present solution for processing HTTP requests,
- FIG. **3**: illustrates an example of an arrangement according to the invention,
- FIG. **4**: illustrates an example of a flow chart describing the method according to the invention, and
- FIG. **5**: illustrates an example of another arrangement according to the invention.

### Detailed Description of the Invention

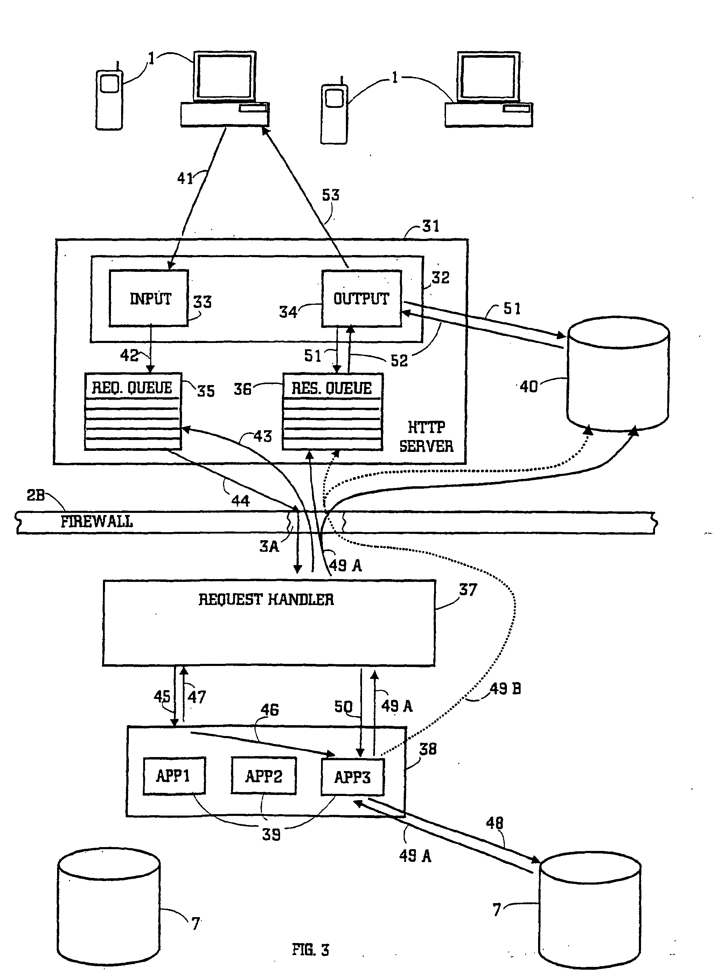

FIG. **3** shows an example of an arrangement according to the invention. A client terminal **1** sends an HTTP request **41** to the HTTP server **31**. The HTTP server contains an application **32** which handles the receiving of HTTP requests in an input processing element **33**, and sending of responses back to clients' terminals in an output processing element **34**. The received HTTP requests are forwarded **42** for stocking them in a request queue **35**. The HTTP server also contains a response queue **36** for responses to the clients' terminals. The HTTP server is located outside a firewall **2B**.

Inside the firewall there is an element **37,** called request handler, which handles the creation of connections through the firewall. The request handler also directs the HTTP request to a relevant application **39** for establishing the service requested.

The request handler is preferably middleware software. The definition of middleware is not accurate, but usually middleware is considered to be a layer or software between the network and the applications. Middleware makes advanced network applications much easier to use. Possible middleware techniques for creating the request handler are, for example, CORBA, TUXEDO, COM, DCOM, RPC and RMI.

The request handler **37** inquires **43** from the request queue **35** in the HTTP server **31** if a request is available in the queue, requiring a response **44** to the request handler. At the same time when sending **43** an inquiry, the request handler creates a connection through the firewall, i.e. open a "hole" **3A** in the firewall. If there is a request in the request queue, it can be put into a response for the request of the request handler and sent to the request handler through the hole of the firewall **2B**.

The request handler inquires **45** from an application logic **38,** which application 39 is the right one for the request. The application logic maps **46** (using for example URL information) the application and the HTTP-request, and returns **47** the mapping information to the request handler. The request handler sends **50** the HTTP request to the right application **39.** It can be possible that the application logic is combined with the request handler, but keeping them separate is preferable.

As can be noticed, the request handler acts like a client process, which uses outside services, i.e. the HTTP server, the application logic, and the applications.

If needed, the application **39** can use a database **7** for querying **48** the data needed for establishing the service request. The response data is delivered back **49A** through the application and the request handler to the response queue through the firewall or to a special database **40** outside the firewall. The special database is used if the response contains a great amount of data wherefore it is inefficient or impossible to use the response queue. Alternatively, the response data is delivered back **49B** just through the application to the response queue or the special database.

The output processing element **34** asks **51** the response queue **36** or the special database **40** whether responses are ready for delivering to the clients' terminals 1. If there are responses in the queue or in the database the responses are conducted **52** to the output processing element **34**, which delivers **53** them to the clients terminals.

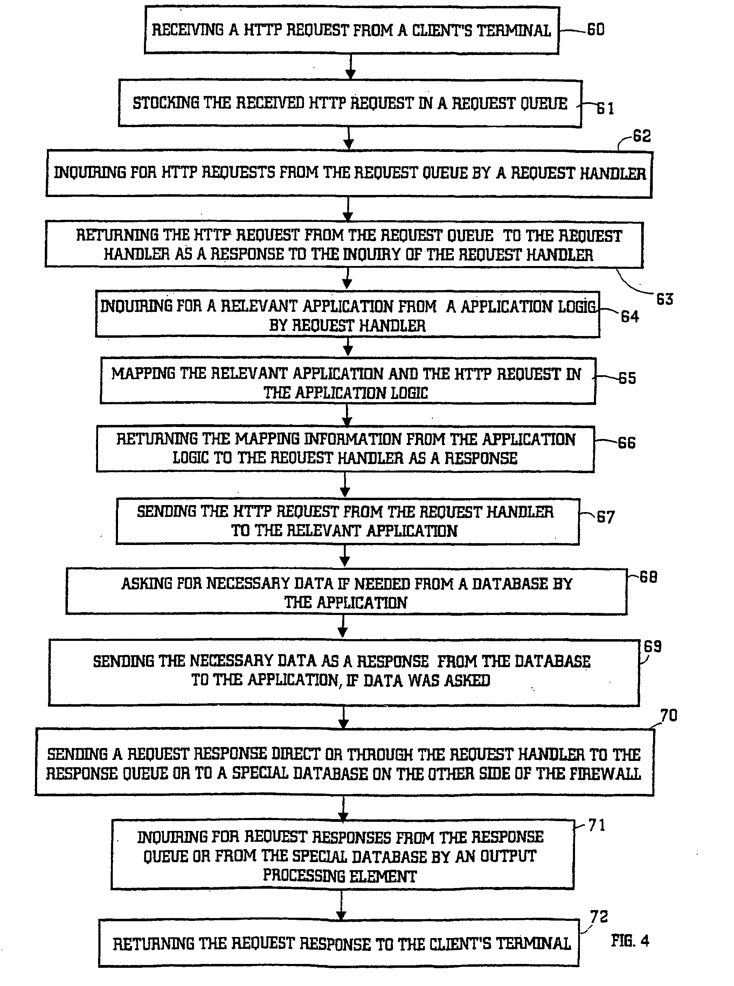

FIG. **4** shows an example of a flow chart describing the method according to the invention. First, the input processing element **33** in the HTTP server receives **60** a HTTP request from a client's terminal. The received HTTP request is stocked **61** in the request queue. The request handler, which is on the other side of the firewall, inquires **62** received HTTP requests in the request queue. Due to this the request handler opens a connection through the firewall - from the safe side of the firewall. As a response to the inquiry the received HTTP request is returned **63** to the request handler through the firewall.

Next, the request handler inquires **64** about a relevant application for handling the HTTP request from the application logic. As a response to this inquiry the application logic maps **65** the relevant application and the HTTP request together, and returns **66** the mapping information to the request handler. The request handler sends **67** the HTTP request to the relevant application.

The application can ask **68** necessary data, if needed, for a request response from a database. If the data from the database is needed for performing the request response, the response from the database is conducted **69** to the application. Alternatively, the application can form the request response without using the database.

The application sends **70** the request response either directly to the response queue in the HTTP server or to the special database on the other (unsafe) side of the firewall, or through the request handler to the response queue in the HTTP server or to the special database on the other side of the firewall.

The output processing element in the HTTP server inquires **71** about request responses from the response queue and the special database. If a request response exists in the response queue or in the special database the output processing element delivers (sends) 72 it to the client's terminal.

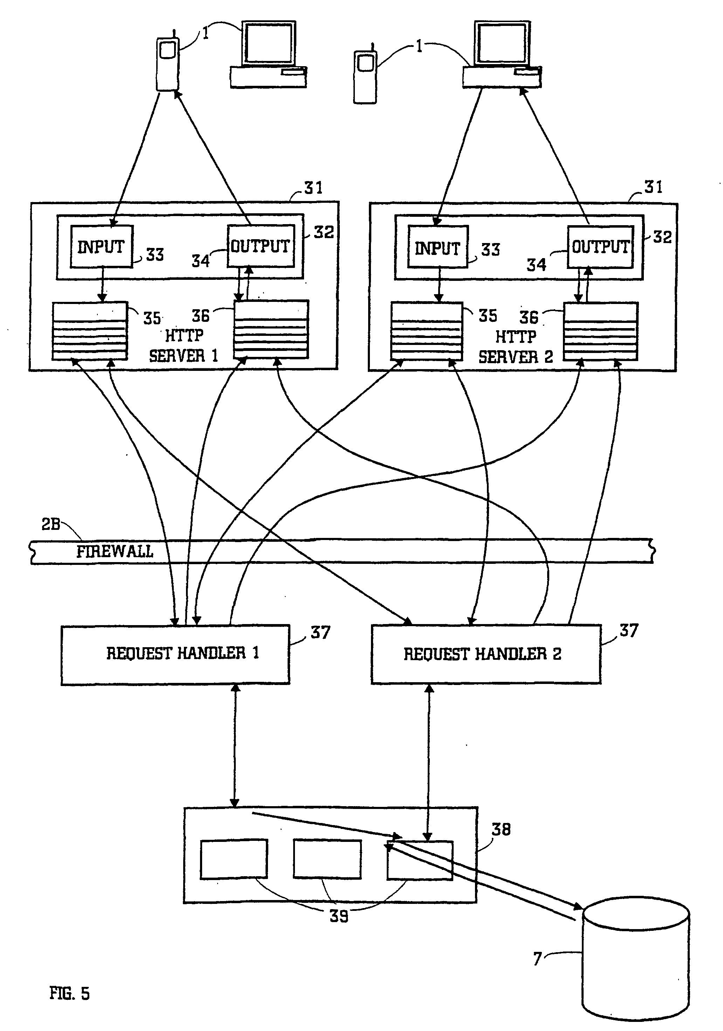

The arrangement according to the invention offers a very robust environment for providing services. The arrangement is almost linearly scalable. The request handler can pick up HTTP requests from several HTTP servers and queues as depicted in FIG. **5.** On the other hand, there can also be several request handlers, which are capable of delivering requests to the same applications. The arrangement is stable as well since the HTTP servers and the request handlers can be cross-connected in a way that the request handlers can pick up a HTTP request from the queue of the same HTTP server.

The processing of HTTP requests can be prioritized. HTTP servers can contain several request and response queues, which can be used for the prioritization. This means that the HTTP server places HTTP request into different queues according to certain criteria. The criteria can be, for example, the URL requested or a part of it, session ID, client's IP address, or client's phone number. Each queue can be connected to a different request handler.

Request handlers can vary from each other. For example, certain request handlers are optimized for fast handling, others for taking into account security needs, and some request handlers for handling a certain type of traffic, such as management traffic or high priority services. Request handlers can also provide authentication and authorization tasks, and also session management. Request handlers can also support transaction management.

As can be noticed, the arrangement according to the invention can be realized in many ways. The application handling input/output processing in the HTTP server can be performed by using a common application interface technique, such as CGI, NSAPI, ISAPI, or JavaServlet. Request and response queues can act in a FIFO (First In First Out) principle. The queues provide read (GetRequest) and write (AddRequest) actions. The services of the queues can be performed using different techniques, such as middleware (CORBA, TUXEDO, DCOM, COM, RPC, RMI). Middleware techniques can be used when performing the request handler as mentioned before.

The application logic can also be performed using middleware techniques. The application logic can be thought to be a service, from which the request handler can ask the relevant application for the HTTP request under processing. The special database can also be seen as a service, through which applications can deliver huge responses to the HTTP server, past the response queue. There are several ways for providing the database: using a normal file system with, for example, FTP or NFS, using some database technique, or modeling the database as a service, such as CORBA.

As can be noticed, the request handler preferably acts as a client that uses outside services, but this is not the only solution for performing an arrangement according to the invention. Although, the invention is described in this text handling HTTP request from clients' terminals, such as a Web browser or WAP mobile phone it should be mentioned that it is possible to handle other kinds of requests as well. According to the matters mentioned above, it is clear that the arrangement according to the invention can be performed in many ways, in the scope of the invention as claimed.

## Claims

1. An arrangement for providing services in a communication network environment, which comprises at least one client's terminal (1), one server (31) for connecting the services and the clients' terminals, one back-end system (7, 38, 39) for the server, and a firewall (2B) between the server situated outside the firewall and the back-end system which is situated inside the firewall and handles the performing of responses to be sent to the clients' terminals, **characterized in that** the server comprises
- an application (32) for receiving service requests from the clients' terminals, and for sending responses to the clients' terminals,
- a request queue (35) for the received service requests, and
- a response queue (36) for the responses to be sent to the clients terminals,
and the back-end system comprises a request handler (37) to open a connection through the firewall for picking up the requests from the request queue.

2. An arrangement according to claim 1, **characterized in that** the arrangement further comprises a special database (40) for keeping the responses, which are too large for the response queue to handle.

3. An arrangement according to claim 2, **characterized in that** the application for receiving the service requests further comprises
- an input processing element (33) for receiving the service request and delivering them to the request queue (35) and
- an output processing element (34) for inquiring for the responses from the response queue (36) and from the special database (40) and for sending the responses to the clients' terminals.

4. An arrangement according to claim 3, **characterized in that** the back-end system further comprises an application logic (38) for mapping together the requests from the request handler (37) and applications (39) that handle the requests.

5. An arrangement according to claim 3 or 4, **characterized in that** the back-end system further comprises at least one database (7) from where the application (39), which handles the requests, can ask for necessary data for the responses which are sent to the response queue (36) or to the special database (40).

6. An arrangement according to claim 5, **characterized in that** the special database (40) is performed to be a service for the other elements of the arrangement which use the special database (40).

7. An arrangement according to claim 6, **characterized in that** the request (35) and the response queue (36) are performed to be services for the other elements of the arrangement which use them.

8. An arrangement according to claim 7, **characterized in that** the application logic (38) is performed to be a service for the other elements of the arrangement which use it.

9. An arrangement according to claim 8, **characterized in that** the request handler (37) is performed to be a client which uses the services in the arrangement.

10. An arrangement according to claim 1-9, **characterized in that** the service requests are HTTP requests.

11. A method for providing services in a communication network environment, which comprises at least one client's terminal (1), one server (31) for connecting the services and the clients' terminals, one back-end system (7, 38, 39) for the server and a firewall (2B) between the server situated outside the firewall and the back-end system situated inside the firewall, the method comprising the steps of receiving a service request from the clients terminal in the server and sending a response from the server to the clients terminal, **characterized in that** the method further comprises the steps of:
- stocking the received service request in a request queue (35) in the server,
- opening a connection from the back-end side of the firewall for inquiring about a request in the request queue (35) by a request handler (37),
- returning the request from the request queue (35) in the server side of the firewall to the request handler (37) in the back-end side of the firewall, as a response to the inquiry, and
- sending the response from the back-end side of the firewall to a predetermined element (36,40) in the server side of the firewall.

12. A method according to claim 11, **characterized in that** the method further comprises the steps of:
- requesting a relevant application (39) from an application logic (38) in the back-end side of the firewall by the request handler (37) and
- sending the request from the request handler (37) to the relevant application (39) for forming the response.

13. A method according to claim 12, **characterized in that** between the steps of inquiring about the relevant application and sending the request from the request handler to the relevant application the method further comprises the steps of:
- mapping the relevant application (39) and the request in the application logic (38) and
- sending the mapping information from the application logic (38) to the request handler (37).

14. A method according to claim 12 or 13, **characterized in that** the method further comprises, if needed, the step of asking for necessary data from a database (7) and the step of returning the necessary data as a response to the relevant application (39) for forming the response.

15. A method according to claim 12, 13, or 14, **characterized in that** the response is sent from the application to the predetermined element, which is a response queue (36) in the server.

16. A method according to claim 15, **characterized in that** the response is sent through the request handler (37).

17. A method according to claim 12, 13, or 14, **characterized in that** the response is sent from the application to the predetermined element, which is a special database (40) in the server side of the firewall.

18. A method according to claim 17, **characterized in that** the response is sent through the request handler (37).

19. A method according to claim 11 or 16, **characterized in that** before the step of sending the response from the server to the client's terminal the method further comprises the step of inquiring for the response from the response queue (36) by an output processing element (34).

20. A method according to claim 17 or 18, **characterized in that** before the step of sending the response from the server to the client's terminal the method further comprises the step of inquiring for the response from the special database (40) by an output processing element (34).

## Patentansprüche

1. Eine Anordnung zur Bereitstellung von Dienstleitungen in einer Kommunikationsnetzwerkumgebung, welche mindestens einen Client-Terminal (1), einen Server (31) für die Verbindung der Dienstleistungen und des Client-Terminals, ein Back-end-System (7, 38, 39) für den Server, welches innerhalb des Firewalls angeordnet ist und die Ausführung von an die Client-Terminals zu übermittelnden Antworten abwickelt, und einen Firewall (2B) zwischen dem ausserhalb des Firewalls angeordneten Server und dem Back-end-System, **dadurch gekennzeichnet, dass** der Server
- ein Anwendungsprogramm (32) für den Empfang von Anforderungen von Dienstleistungen von den Client-Terminals und für die Übermittlung von Antworten an die Client-Terminals,
- eine Warteschlange von Anforderungen (35) für die empfangenen Anforderungen von Dienstleistungen und
- eine Warteschlange für Antworten (36) für die an die Client-Terminals zu übermittelnden Antworten
aufweist, und das Back-end-System, welches ein Abwicklungsunterprogramm für Anforderungen (37) aufweist, um eine Verbindung durch den Firewall hindurch zwecks Übernahme der Anforderungen aus der Warteschlange für Anforderungen zu eröffnen.

2. Eine Anordnung gemäss Anspruch 1, **dadurch gekennzeichnet, dass** die Anordnung des Weiteren eine spezielle Datenbank (40) aufweist, um diejenigen Antworten zu speichern, welche zu gross sind, um von der Warteschlange für Antworten abgewickelt zu werden.

3. Eine Anordnung gemäss Anspruch 2, **dadurch gekennzeichnet, dass** das Back-end-System für den Empfang der Dienstleistungsanforderungen des Weiteren
- ein Element für die Verarbeitung von Eingängen (33) für den Empfang der Dienstleistungsanforderung und für deren Übergabe an die Warteschlange für Anforderungen (35) und
- ein Element für die Verarbeitung von Ausgängen (34) für die Anfrage nach Antworten von der Warteschlange für Antworten (36) und von der speziellen Datenbank (40) und für die Übermittlung der Antworten an die Client-Terminals aufweist.

4. Eine Anordnung gemäss Anspruch 3, **dadurch gekennzeichnet, dass** das Back-end-System des Weiteren eine Anwendungsprogrammlogik (38) für die Kartierung der Anforderungen aus dem Abwicklungsunterprogramm für Anforderungen (37) sowie Anwendungsprogramme (39), welche die Anforderungen abwickeln, aufweist.

5. Eine Anordnung gemäss Anspruch 3 oder 4, **dadurch gekennzeichnet, dass** das Back-end-System des Weiteren mindestens eine Datenbank (7) aufweist, von welcher das Anwendungsprogramm (39), welches die Anforderungen abwickelt, die für die an die Warteschlange für Antworten (36) oder an die spezielle Datenbank (40) übermittelten Antworten erforderlichen Daten abzufragen in der Lage ist

6. Eine Anordnung gemäss Anspruch 5, **dadurch gekennzeichnet, dass** die spezielle Datenbank (40) so ausgeführt ist, dass sie eine Dienstleistung für die anderen Elemente der Anordnung darstellt, welche die spezielle Datenbank (40) verwenden.

7. Eine Anordnung gemäss Anspruch 6, **dadurch gekennzeichnet, dass** die Warteschlangen für Anforderungen (35) und für Antworten (36) so ausgeführt sind, dass sie Dienstleistungen für die anderen Elemente der Anordnung darstellen, welche sie verwenden.

8. Eine Anordnung gemäss Anspruch 7, **dadurch gekennzeichnet, dass** die Anwendungsprogrammlogik (38) so ausgeführt ist, dass sie eine Dienstleistung für die anderen Elemente der Anordnung darstellt, welche sie verwenden.

9. Eine Anordnung gemäss Anspruch 8, **dadurch gekennzeichnet, dass** das Abwicklungsunterprogramm für Anforderungen (37) als ein Client ausgeführt ist, welcher die Dienstleistungen in der Anordnung verwendet.

10. Eine Anordnung gemäss Anspruch 1 bis 9, **dadurch gekennzeichnet, dass** die Anforderungen für Dienstleistungen HTTP Anforderungen sind.

11. Ein Verfahren für die Bereitstellung von Dienstleistungen in einer Kommunikationsnetzwerkumgebung, welche mindestens einen Client-Terminal (1), einen Server (31) für die Verbindung der Dienstleistungen und des Client-Terminals, ein Back-end-System (7, 38, 39) für den Server und einen Firewall (2B) zwischen dem ausserhalb des Firewalls angeordneten Server und dem Back-end-System aufweist, wobei das Verfahren die Schritte des Empfangens einer Anforderung für Dienstleistungen vom Client-Terminal im Server und des Übermittelns einer Antwort vom Server an den Client-Terminal aufweist, **dadurch gekennzeichnet, dass** das Verfahren des Weiteren die Schritte
- des Speichems der empfangenen Anforderungen für Dienstleistungen in einer Warteschlange für Anforderungen (35) im Server,
- des Eröffnens einer Verbindung von der Back-end-Seite des Firewalls für die Nachfrage nach einer Anforderung in der Warteschlange für Anforderungen (35) in der Server-Seite des Firewalls zum Abwicklungsprogramm für Anforderungen (37) in der Back-end-Seite des Firewalls als Antwort auf die Nachfrage und
des Übermittelns der Antwort von der Back-end-Seite des Firewalls an ein vorbestimmtes Element (36, 40) in der Server-Seite des Firewalls aufweist.

12. Ein Verfahren gemäss Anspruch 11, **dadurch gekennzeichnet, dass** das Verfahren des Weiteren die Schritte
- des Anforderns durch das Abwicklungsprogramm für Anforderungen (37) eines entsprechenden Anwendungsprogramms (39) von einer Anwendungsprogrammlogik (38) in der Back-end-Seite des Firewalls und
- des Übermittelns der Anforderung zwecks Bildung der Antwort vom Abwicklungsprogramm für Anforderungen (37) an das entsprechende Anwendungsprogramm (39) aufweist.

13. Ein Verfahren gemäss Anspruch 12, **dadurch gekennzeichnet, dass** zwischen den Schritten der Nachfrage nach dem entsprechenden Anwendungsprogramm und der Übermittlung der Anforderung vom Abwicklungsprogramm für Anforderungen an das entsprechende Anwendungsprogramm das Verfahren des weiteren die Schritte
- des Kartierens des entsprechenden Anwendungsprogramms (39) und der Anforderung in der Anwendungsprogrammlogik (38)
- des Übermittels der Kartierungsinformationen von der Anwendungsprogrammlogik (38) an das Abwicklungsprogramm für Anforderungen (37) aufweist.

14. Ein Verfahren gemäss den Ansprüchen 12 oder 13, **dadurch gekennzeichnet, dass** das Verfahren falls erforderlich des Weiteren den Schritt des Nachfragens nach erforderlichen Daten von einer Datenbank (7) und den Schritt des Zurücksendens der erforderlichen Daten als eine Antwort an das entsprechende Anwendungsprogramm (39) für die Bildung der Antwort aufweist.

15. Ein Verfahren gemäss den Ansprüchen 12, 13 oder 14, **dadurch gekennzeichnet, dass** die Antwort vom Anwendungsprogramm an das vorbestimmte Element übermittelt wird, welches Element eine Warteschlange für Anworten (36) im Server ist.

16. Ein Verfahren gemäss Anspruch 15, **dadurch gekennzeichnet, dass** die Antwort durch das Abwicklungsprogramm für Anforderungen (37) übermittelt wird.

17. Ein Verfahren gemäss den Ansprüchen 12, 13 oder 14, **dadurch gekennzeichnet, dass** die Antwort vom Anwendungsprogramm an das vorbestimmte Element übermittelt wird, welches Element eine spezielle Datenbank (40) in der Serverseite des Firewalls ist.

18. Ein Verfahren gemäss Anspruch 17, **dadurch gekennzeichnet, dass** die Antwort durch das Abwicklungsprogramm für Anforderungen (37) übermittelt wird.

19. Ein Verfahren gemäss den Ansprüchen 11 oder 16, **dadurch gekennzeichnet, dass** vor dem Schritt des Übermittelns der Antwort vom Server an den Client-Terminal das Verfahren des Weiteren den Schritt des Nachfragens durch ein Element für die Verarbeitung von Ausgängen nach der Antwort von der Warteschlange der Antworten (36) aufweist.

20. Ein Verfahren gemäss den Ansprüchen 17 oder 18, **dadurch gekennzeichnet, dass** vor dem Schritt des Übermittelns der Antwort vom Server an das Client-Terminal das Verfahren des Weiteren den Schritt des Nachfragens durch ein Element für die Verarbeitung von Ausgängen (34) nach der Antwort von der speziellen Datenbank (40) aufweist.

## Revendications

1. Un ensemble fournir des services dans un environnement de réseau de télécommunication, qui comprend au moins un terminal du client (1), un serveur (31) pour connecter les services et les terminaux de clients, un système dorsal de traitement (7, 38, 39) pour le serveur, et un coupe-feu (2B) entre le serveur qui est situé en dehors du coupe-feu et le système dorsal de traitement qui est situé à l'intérieur du coupe-feu et qui s'occupe de l'exécution des réponses à envoyer aux terminaux de clients, **caractérisé en ce que** le serveur comprend :
- un logiciel d'application (32) pour recevoir des requêtes de service des terminaux de clients et pour envoyer des réponses aux terminaux de clients,
- une file d'attente de requêtes (35) pour les requêtes de service reçues, et
- une file d'attente de réponse (36) pour les réponses à envoyer aux terminaux de clients,
et le système dorsal de traitement comprend un gestionnaire de requêtes (37) pour ouvrir une connexion à travers le coupe-feu de façon à capter les requêtes à partir de la file d'attente de requêtes.

2. Un ensemble selon la revendication 1, **caractérisé en ce que** l'ensemble comprend en outre une base de données spéciale (40) pour la mémorisation temporaire des réponses qui sont trop grandes pour la file d'attente de réponses à traiter.

3. Un ensemble selon la revendication 2, **caractérisé en ce que** le logiciel d'application pour recevoir la requête de service comprend en outre:
- un élément de traitement à l'entrée (33) pour recevoir la requête de service et les livrer à la file d'attente de requêtes et
- un élément de traitement à la sortie (34) pour se renseigner sur les réponses à partir de la file d'attente de réponse (36) et de la base de données spéciale (40) et pour envoyer les réponses aux terminaux de clients.

4. Un ensemble selon la revendication 3, **caractérisé en ce que** le système dorsal de traitement comprend en outre une logique applicative (38) pour le mappage conjoint des requêtes à partir du gestionnaire de requêtes (37) et des logiciels d'application (39) qui traitent les requêtes.

5. Un ensemble selon la revendication 3 ou 4, **caractérisé en ce que** le système dorsal de traitement comprend en outre au moins une base de données (7) à partir de laquelle le logiciel d'application (39), qui traite les requêtes, peut demander les données nécessaires pour les réponses qui sont envoyées à la file d'attente de réponses (36) ou à la base de données spéciale (40).

6. Un ensemble selon la revendication 5, **caractérisée en ce que** la base de données spéciale (40) est réalisée pour être un service pour les autres éléments de l'ensemble qui utilisent la base de données spéciale (40).

7. Un ensemble selon la revendication 6, **caractérisé en ce que** la requête (35) et la file d'attente de réponses (36) sont réalisées pour être des services pour les autres éléments de l'ensemble qui les utilisent.

8. Un ensemble selon la revendication 7, **caractérisé en ce que** la logique applicative (38) est réalisée pour être un service pour les autres éléments de l'ensemble qui l'utilisent.

9. Un ensemble selon la revendication 8, **caractérisé en ce que** le gestionnaire de requêtes (37) est réalisé pour être un client qui utilise les services dans l'ensemble.

10. Un ensemble selon les revendications de 1 à 9, **caractérisé en ce que** les requêtes de service sont des requêtes HTTP.

11. Une méthode pour fournir des services dans un environnement de réseau de télécommunication qui comprend au moins un terminal du client (1), un serveur (31) pour connecter les services et les terminaux de clients, un système dorsal de traitement (7, 38, 39) pour le serveur et un coupe-feu (2B) entre le serveur situé en dehors du coupe-feu et le système dorsal de traitement situé à l'intérieur du coupe-feu, la méthode comprenant les étapes de réception d'une requête de service à partir du terminal de clients dans le serveur et d'envoyer une réponse à partir du serveur au terminal de clients, **caractérisée en ce que** la méthode comprend en outre les étapes de:
- mémorisation de la requête de service dans une file d'attente de requêtes (35) dans le serveur,
- ouverture d'une connexion à partir du côté dorsal de traitement du coupe-feu pour s'enquérir au sujet d'une requête dans la file d'attente de requêtes (35) par un gestionnaire de requêtes (37),
- renvoyer la requête à partir de la file d'attente des requêtes (35) dans le côté serveur du coupe-feu au gestionnaire de requêtes (37) dans le côté dorsal de traitement du coupe-feu en tant que réponse à la requête, et
- envoi de la réponse à partir du côté dorsal de traitement du coupe-feu à un élément prédéterminé (36, 40) dans le côté serveur du coupe-feu.

12. Une méthode selon la revendication 11, **caractérisée en ce que** la méthode comprend en outre les étapes de:
- requête d'un logiciel d'application approprié (39) à partir d'une logique applicative (38) dans le côté dorsal de traitement du coupe-feu par le gestionnaire de requêtes (37) et
- envoi de la requête par le gestionnaire de requêtes (37) au logiciel d'application approprié (39) pour la formation de la réponse.

13. Une méthode selon la revendication 12, **caractérisée en ce qu'**entre les étapes de renseignement au sujet du logiciel d'application approprié et l'envoi de la requête par le gestionnaire de requêtes au logiciel d'application approprié, la méthode comprend en outre les étapes de:
- mappage du logiciel d'application approprié (39) et de la demande dans la logique applicative (38) et
- envoi de l'information de mappage à partir de la logique applicative (38) au gestionnaire de requêtes (37).

14. Une méthode selon la revendication 12 ou 13, **caractérisée en ce que** la méthode comprend en outre, si nécessaire, l'étape de demander les données nécessaires à partir d'une base de données (7) et l'étape de renvoyer les données nécessaires en tant que réponse au logiciel d'application approprié (39) pour la formation de la réponse.

15. Une méthode selon la revendication 12, 13, ou 14, **caractérisée en ce que** la réponse est envoyée à partir du logiciel d'application à l'élément prédéterminé qui est une file d'attente de réponses (36) dans le serveur.

16. Une méthode selon la revendication 15, **caractérisée en ce que** la réponse est envoyée moyennant le gestionnaire de requêtes (37).

17. Une méthode selon la revendication 12, 13, ou 14, **caractérisés en ce que** la réponse est envoyée à partir du logiciel d'application à l'élément prédéterminé qui est une base de données spéciale (40) dans le côté serveur du coupe-feu.

18. Une méthode selon la revendication 17, **caractérisée en ce que** la réponse est envoyée moyennant le gestionnaire de requêtes (37).

19. Une méthode selon la revendication 11 ou 16, **caractérisée en ce qu'**avant l'étape d'envoyer la réponse à partir du serveur au terminal du client, la méthode comprend en outre l'étape de renseignement pour la réponse à partir de la file d'attente de réponses (36) par un élément de traitement à la sortie (34).

20. Une méthode selon la revendication 17 ou 18, **caractérisée en ce qu'**avant l'étape d'envoyer la réponse à partir du serveur au terminal du client, la méthode comprend en outre l'étape de renseignement pour la réponse à partir de la base de données spéciale (40) par un élément de traitement à la sortie (34).
